# EUROPÄISCHE PATENTSCHRIFT

(11) **EP 1 874 603 B1**
(45) Veröffentlichungstag und Bekanntmachung des Hinweises auf die Patenterteilung: **15.07.2009**
(21) Anmeldenummer: 06724375.8
(22) Anmeldetag: 18.04.2006
(51) Int. Cl.: B60T 17/08, B61G 5/10, F16L 3/00

(54) **BEFESTIGUNGSVORRICHTUNG ZUM ÄUSSEREN BEFESTIGEN VON KABELN ODER LEITUNGEN AN GEHÄUSEN**
FASTENING DEVICE FOR EXTERNALLY FASTENING CABLES OR LINES TO HOUSINGS
DISPOSITIF DE FIXATION POUR LA FIXATION EXTERNE DE CABLES OU DE CONDUITES SUR DES CARTERS

(30) Priorität: 19.04.2005 DE 102005018038
(43) Veröffentlichungstag der Anmeldung: 09.01.2008
(73) Patentinhaber: KNORR-BREMSE SYSTEME FÜR NUTZFAHRZEUGE GMBH, 80809 München (DE)
(72) Erfinder: HEMERY, Franck, F-14600 Honfleur (FR); FANTAZI, Alain, F-14160 Dives sur mer (FR); MARTIN, Vincent, F-14100 Les Monceaux (FR)
(74) Vertreter: Mattusch, Gundula
(86) Internationale Anmeldenummer: PCT/EP2006/003506
(87) Internationale Veröffentlichungsnummer: WO 2006/111342

(56) Entgegenhaltungen:
- EP-A- 1 588 917
- US-A- 5 967 468
- PATENT ABSTRACTS OF JAPAN Bd. 2003, Nr. 10, 8. Oktober 2003 (2003-10-08) -& JP 2003 168878 A (TAKEUCHI KOGYO KK), 13. Juni 2003 (2003-06-13)

## Beschreibung

### Stand der Technik

Die Erfindung betrifft eine Vorrichtung, die ein Gehäuse mit einer Atmungsbohrung aufweist, wobei das Gehäuse mit einer Befestigungsvorrichtung zum äußeren Befestigen von Kabeln oder Leitungen versehen ist und die Befestigungsvorrichtung einen Befestigungszapfen aufweist, in dem ein Verbindungskanal ausgebildet ist, gemäß dem Oberbegriff von Anspruch 1.

Ein solche Befestigungsvorrichtung ist in der JP 2003 168878 A beschrieben und dient zur Befestigung von Kabeln an einem Brett. Eine Befestigungsvorrichtung der gleichen Art ist in der US 5 967 468 A offenbart. Sie hält ein Antennenkabel an einem Turm.

In der bisher unveröffentlichten DE 10 2004 04 4939 ist eine Befestigungsvorrichtung zum äußeren Befestigen von Kabeln oder Leitungen an einem Gehäuse eines Bremszylinders beschrieben. Sie besteht in einer Befestigungsklemme, welche zum einen an einer ringförmigen Umbördelung eines Gehäuseteils eines Bremszylinders und zum andern über einen in der Atmungsbohrung des Gehäuses einrastbaren Zapfen mit dem Gehäuse verbunden ist.

Demgegenüber ist es die Aufgabe der vorliegenden Erfindung, eine im Hinblick auf ihre Funktionalität verbesserte Befestigungsvorrichtung zur Befestigung von Kabeln oder Leitungen an Gehäusen zur Verfügung zu stellen.

Diese Aufgabe wird durch die Merkmale von Anspruch 1 gelöst.

### Offenbarung der Erfindung

Die Erfindung schlägt vor, dass der Befestigungszapfen in der Atmungsbohrung des Gehäuses verrastet ist, wobei im verrasteten Zustand das Innere des Gehäuses durch den Verbindungskanal mit der Atmosphäre in Verbindung steht. Dann steht im verrasteten Zustand das Innere des Gehäuses mit der Atmosphäre in Verbindung.

Weil in dem Befestigungszapfen ein Verbindungskanal ausgebildet ist, wird die Atmungsbohrung nicht verschlossen und kann somit weiterhin die Funktion ausführen, für einen Ablauf von Kondenswasser aus dem Inneren des Gehäuses nach außen sowie für einen Luftaustausch zu sorgen. Dies ist insbesondere dann wesentlich, wenn, wie in der Praxis üblich, am Gehäuse eines Bremszylinders eine Vielzahl von Kabeln und Leitungen befestigt sind und demzufolge die Mehrzahl der Atmungsbohrungen als Fixierpunkte für die Befestigungsvorrichtungen dienen müssen, welche andernfalls verschlossen wären und somit durch weitere, die Fertigungskosten erhöhende Atmungsbohrungen ergänzt werden müssten. Insbesondere können mehrere Atmungsbohrungen mit einer solchen Befestigungsvorrichtung versehen sein, ohne dass der Luftaustausch oder der Abfluss von Kondenswasser darunter leidet, so dass Kabel und Leitungen auch an mehreren Stellen am Gehäuse angebunden sein können. Da die Atmungsbohrungen ihre Belüftungs- und Entwässerungsaufgabe dann ungehindert ausüben können, wird die Gefahr von Korrosion im Inneren des Gehäuses reduziert, was insbesondere bei sicherheitsrelevanten Bremszylindern von großem Vorteil ist.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist die Befestigungsvorrichtung lediglich über den Befestigungszapfen am Gehäuse befestigt und der Befestigungszapfen in der Atmungsbohrung derart verrastet, dass die Befestigungsvorrichtung um eine Zapfenachse gegenüber dem Gehäuse schwenkbar ist. Dadurch können sich die Kabel und Leitungen, welche in der Regel eine gewisse Steifigkeit aufweisen, gegenüber dem Gehäuse frei ausrichten, indem die Befestigungsvorrichtung in die jeweilige Richtung schwenkt. Infolgedessen kann eine Umlenkung oder Biegung der Kabel und Leitungen vermieden werden, was aufgrund der Spannungsfreiheit zum einen ihre Lebensdauer erhöht und zum andern eine kurze Verlegelänge ermöglicht, was vor allem bei pneumatischen Leitungen von Bremszylindern von Vorteil ist, welche einen längenabhängigen Strömungswiderstand aufweisen.

Die Verrastung des Befestigungszapfens mit der Atmungsbohrung des Gehäuses kann beispielsweise dadurch realisiert sein, dass der Befestigungszapfen wenigstens zwei von einem Grundkörper weg ragende, elastisch verformbare Schenkel mit einem zwischengeordneten Schlitz beinhaltet, welcher den Verbindungskanal ausgebildet. Dadurch erfüllt der Befestigungszapfen eine Doppelfunktion, indem er einerseits für die rastbare Befestigung der Befestigungsvorrichtung am Gehäuse sorgt, aber andererseits auch gleichzeitig den Verbindungskanal ausbildet.

Ein Verschluss des Verbindungskanals bei in der Atmungsbohrung verrastetem Befestigungszapfen wird beispielsweise dadurch verhindert, dass von dem Grundkörper wenigstens ein im verrasteten Zustand eine Außenfläche des Gehäuses kontaktierender Abstandshalter derart wegragt, dass ein sich über die Außenfläche hinaus erstreckender Endabschnitt des Kanals wenigstens seitlich mit der Atmosphäre in Verbindung steht.

Gemäß einer weiteren bevorzugten Maßnahme kann der Grundkörper weiterhin mit einem Durchgangsschlitz zur Durchführung eines elastischen Kunststoffkabelverbinders versehen sein, welcher die am Gehäuse zu befestigenden Kabel und Leitungen umschlingt. Zusätzlich kann der Grundkörper mit wenigstens zwei standardisierten Aufnahmen für solche elastischen Kunststoffkabelverbinder versehen sein, welche in verschiedene Richtungen weisen. Dann können Kabel und Leitungen gebündelt am Gehäuse befestigt werden, welche sich überkreuzen. In Kombination mit der Schwenkmöglichkeit der Befestigungsvorrichtung ist folglich eine Vielzahl von Richtungen darstellbar, in welchen die Kabel und Leitungen in Bezug zum Gehäuse umlenkungsfrei verlaufen können.

Besonders bevorzugt sind auch die Kunststoffkabelverbinder mit den standardisierten Aufnahmen verrastbar, beispielsweise dadurch, dass die standardisierten Aufnahmen durch einen hinterschnittenen Querschnitt aufweisende Aufnahmezapfen gebildet werden, welche in Öffnungen von Befestigungsabschnitten der Kunststoffkabelverbinder einrastbar sind.

### Zeichnungen

Ein Ausführungsbeispiel der Erfindung ist in der Zeichnung dargestellt und in der nachfolgenden Beschreibung näher erläutert. In der Zeichnung zeigt
- Fig.1: eine Querschnittsdarstellung eines Bremszylinders mit einer Befestigungsvorrichtung gemäß einer bevorzugten Ausführungsform der Erfindung;
- Fig.2: eine teilweise aufgebrochene Einzeldarstellung der Befestigungsvorrichtung von Fig.1.
- Fig.3: eine perspektivische Ansicht der Befestigungsvorrichtung von Fig.1 mit einem an ihr befestigten elastischen Kunststoffkabelverbinder.

### Beschreibung des Ausführungsbeispiels

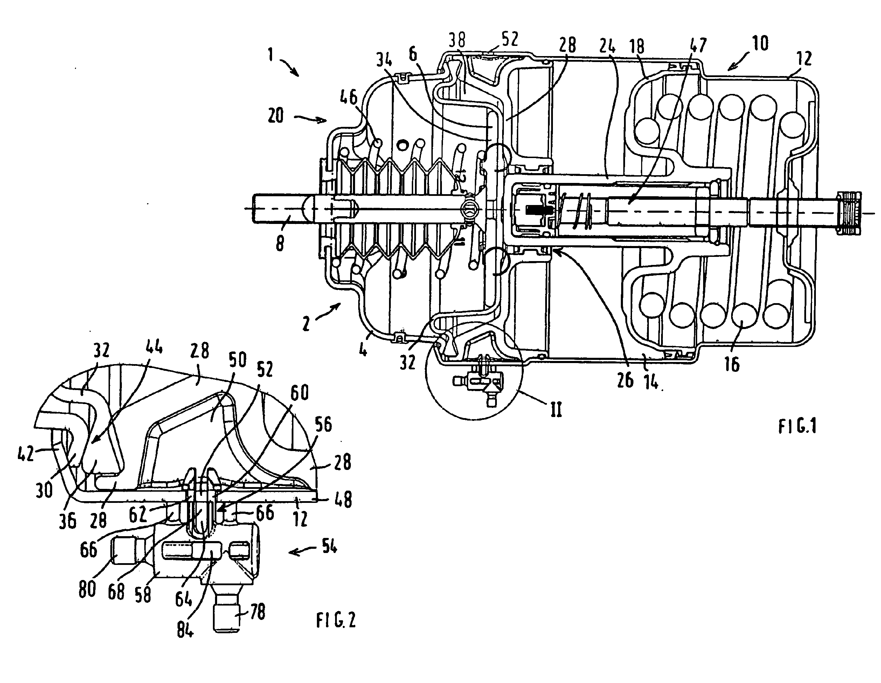

In Fig.1 ist eine kombinierte Betriebsbrems- und Federspeicherbremsvorrichtung 1 gezeigt. Diese umfasst eine Betriebsbremseinrichtung 2 mit einem Betriebsbremszylinder 4, in dem ein pneumatisch beaufschlagbarer Betriebsbremskolben 6 geführt ist, welcher über eine Betriebsbremskolbenstange 8 beispielsweise eine aus Maßstabsgründen nicht gezeigte Scheibenbremse eines Nutzfahrzeugs betätigt. Weiterhin ist eine Federspeicherbremseinrichtung 10 mit einem Federspeicherbremszylinder 12 vorhanden, in welchem ein durch pneumatischen Druck in einer Federspeicherbremskammer 14 gegen die Federkraft einer Speicherfeder 16 spannbarer Federspeicherbremskolben 18 geführt ist, durch welchen der Betriebsbremskolben 6 in Bremszuspannrichtung beaufschlagbar ist. Der Betriebsbremszylinder 4 und der Federspeicherbremszylinder 12 bilden hintereinander koaxial angeordnet einen Kombibremszylinder 20.

Eine Federspeicherbremskolbenstange 24 des Federspeicherbremskolbens 18 durchragt dichtend eine Durchgangsöffnung 26 in einer Trennwand 28 zwischen dem Federspeicherbremszylinder 12 und dem Betriebsbremszylinder 4 und kann mit ihrer Stirnfläche am Betriebsbremskolben 6 anschlagen. Dieser kann eine außenrandseitig zwischen die Trennwand 28 und einer radial äußeren Schulter 30 am Rand des Betriebsbremszylinders 4 eingespannte und axial bewegliche Membran 32 sowie eine zentrale, mit der Membran 32 verbundene Kolbenscheibe 34 beinhalten (Fig.2).

Die Schulter 30 ist vorzugsweise um mehr als 90 Grad umgebogen, so dass sich eine schräge Kontaktfläche zur Membran 32 hin ergibt. Andererseits ist auch die Trennwand 28 an ihrem radial äußeren Rand mit einer schrägen Kontaktfläche versehen, so dass sich dazwischen ein nach radial außen keilförmig erweiternder Querschnitt ergibt, in welchem der komplementär ausgeformte äußere Rand 36 der Membran 32 formschlüssig gehalten ist. Zur Stabilisierung dieses Formschlusses und zur Verbindung des Betriebsbremszylinders 4 mit dem Federspeicherbremszylinder 12 übergreift ein Rand 42 des Letzteren die Schulter 30 des Betriebsbremszylinders 4 formschlüssig, insbesondere durch eine formschlüssige Umbördelung 44, bei welcher der Rand 42 des Federspeicherbremszylinders 12 plastisch verformt wird.

In bekannter Weise kann außerdem der Federspeicherbremskolben 18 gegen die Wirkung der Speicherfeder 16 durch Belüften der Federspeicherbremskammer 14 in Lösestellung gebracht werden. Weiterhin kann durch Belüften einer Betriebsbremskammer 38, welche sich zwischen der Trennwand 28 und dem Betriebsbremskolben 6 erstreckt, Letzterer gegen die Wirkung einer sich einerseits am Betriebsbremskolben 6 und andererseits an einer Stirnwand des Betriebsbremszylinders 4 abstützenden Rückholfeder 46 in Zuspannstellung gebracht werden. Nicht zuletzt ist innerhalb der Federspeicherbremskolbenstange 24 eine mechanische Löseeinrichtung 47 integriert, mit welcher die Federspeicherbremseinrichtung 10 bei Druckausfall not- oder hilfsgelöst werden kann.

Die Funktionsweise einer solchen kombinierten Betriebsbrems- und Federspeicherbremsvorrichtung 1 ist hinlänglich beschrieben worden, beispielsweise in der DE 10 2004 060 862 A1, deshalb soll hier nicht weiter darauf eingegangen werden.

Ein zwischen der Trennwand 28 und einer Mantelwand 48 des Federspeicherbremszylinders 12 ausbildete Ringkammer 50 im Inneren der kombinierten Betriebsbrems- und Federspeicherbremsvorrichtung 1 steht mittels mehrerer beispielsweise über den Umfang in der Mantelwand 48 im Bereich der Umbördelung 44 verteilt angeordneter Atmungsbohrungen 52 mit der Atmosphäre in Verbindung.

Zum äußeren Befestigen von Leitungen, insbesondere von pneumatischen Leitungen oder Kabeln an der kombinierten Betriebsbrems- und Federspeicherbremsvorrichtung 1 ist eine Befestigungsvorrichtung 54 vorgesehen, welche einen Befestigungszapfen 56 umfasst, der in einer der Atmungsbohrungen 52 verrastbar ist. Wie insbesondere aus Fig.2 hervorgeht, besteht der Befestigungszapfen 54 aus vorzugsweise zwei von einem Grundkörper 58 weg ragenden elastisch verformbaren Schenkeln 60, 62 mit einem zwischengeordneten Schlitz 64. Die Schenkel 60, 62 haben einen endseitig kegelförmigen Querschnitt mit einer Hinterschneidung, so dass sich die Schenkel 60, 62 beim Einführen in eine Atmungsbohrung 52 nach radial innen biegen und nach Erreichen der Einrastposition nach außen elastisch zurückfedern, wodurch die Hinterschneidung hinter einem inneren Rand der Atmungsbohrung 52 einrasten kann und die Befestigungsvorrichtung 54 dadurch am Federspeicherbremszylinder 12 axial gehalten ist. Die Durchmesser des Befestigungszapfens 56 und der Atmungsbohrung 52 sind derart ausgeführt, dass sich die Befestigungsvorrichtung 54 gegenüber dem Federspeicherbremszylinder 12 um die Zapfenachse frei schwenken kann.

Der Schlitz 64 des Befestigungszapfens 56, welcher die elastische Bewegung der Schenkel 60, 62 nach radial innen ermöglicht, bildet gleichzeitig einen Verbindungskanal, über welchen das Innere der Ringkammer 50 mit der Atmosphäre in Verbindung steht. Damit der Schlitz 64 nicht durch die Mantelwand 48 des Federspeicherbremszylinders 12 im einsteckten Zustand des Befestigungszapfens 56 verdeckt wird, ragen von dem Grundkörper 58 beispielsweise zwei eine Außenfläche der Mantelwand 48 des Federspeicherbremszylinders 12 kontaktierende Abstandshalter in Form von Abstandszapfen 66 derart weg, dass ein sich über die Mantelwand 48 hinaus erstreckender Endabschnitt 68 des Schlitzes 64 mit der Atmosphäre seitlich in Verbindung steht, wie anhand von Fig.2 anschaulich dargestellt ist. Folglich ist der Endabschnitt 68 des Schlitzes nach zwei Seiten hin offen und kann mit der Atmosphäre kommunizieren. Dabei ist der Befestigungszapfen 56 den beiden Abstandszapfen 66 beispielsweise zwischengeordnet. Alternativ könnte sich der Verbindungskanal 64 auch durch den Grundkörper 58 hindurcherstrecken und dann in die Atmosphäre münden.

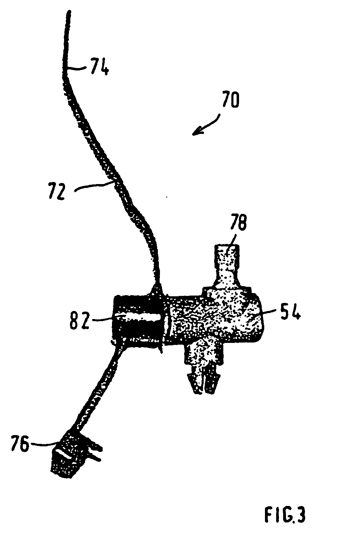

Weiterhin ist der Grundkörper 58 mit wenigstens zwei standardisierten Aufnahmen für elastische Kunststoffkabelverbinder 70 versehen, welche in verschiedene Richtungen weisen. Elastische Kunststoffkabelverbinder sind hinlänglich bekannt, sie bestehen in einem elastisch biegbaren Kunststoffstreifen 72, mit einer Zunge 74 am einen Ende und einer Schlaufe 76 am anderen Ende, wobei die Oberfläche der Zunge 74 mit Rastvorsprüngen versehen ist, welche in einer Öffnung der Schlaufe 76 derart stufenartig verrastbar sind, dass zum Einschnüren eines Bündels von Kabeln und/oder Leitungen oder auch einzelner Kabel und/oder Leitungen ein beliebiger Umschlingungsdurchmesser eingestellt und zugfest gehalten werden kann. Ein solcher elastische Kunststoffkabelverbinder 70 ist in Fig.3 in an der Befestigungsvorrichtung 54 montierter, aber noch offener Stellung gezeigt. Ein solcher Kunststoffkabelverbinder 70 kann mit den standardisierten, vom Grundkörper 58 in verschiedenen Richtungen weg ragenden Aufnahmen 78, 80 verbunden sein, welche vorzugsweise durch einen hinterschnittenen Querschnitt aufweisende Aufnahmezapfen gebildet werden, welche in eine Öffnung eines Befestigungsabschnitts 82 eines Kunststoffkabelverbinders 70 einrastbar sind. Ein solcher Befestigungsabschnitt 82 kann durch einen Hülsenabschnitt mit einer Einstecköffnung gebildet sein, von welcher Rastvorsprünge nach radial innen weg ragen, welche die Aufnahmezapfen 78, 80 im eingesteckten Zustand hintergreifen.

Der Grundkörper 58, der Befestigungszapfen 56, die Abstandszapfen 66 sowie die Aufnahmezapfen 78, 80 können als einstückiger Körper aus Kunststoff ausgeführt sein. Zusätzlich kann der Grundkörper 58 mit einem Durchgangsschlitz 84 zur Durchführung eines elastischen Kunststoffkabelverbinders 70 versehen sein, welcher dann keinen eigenen Befestigungsabschnitt aufzuweisen braucht. Nicht zuletzt können in mehreren Atmungsbohrungen 52 solche Befestigungsvorrichtungen 54 aufgenommen sein, da mittels der Verbindungskanäle 64 in den Befestigungszapfen 56 ein Luftaustausch und Kondenswasserablauf stets gewährleistet ist.

### Bezugszahlenliste

- 1: Betriebsbrems - und Federspeicherbremsvorrichtung
- 2: Betriebsbremseinrichtung
- 4: Betriebsbremszylinder
- 6: Betriebsbremskolben
- 8: Betriebsbremskolbenstange
- 10: Federspeicherbremseinrichtung
- 12: Federspeicherbremszylinder
- 14: Federspeicherbremskammer
- 16: Speicherfeder
- 18: Federspeicherbremskolben
- 20: Kombibremszylinder
- 22: Befestigungsbolzen
- 24: Federspeicherbremskolbenstange
- 26: Durchgangsöffnung
- 28: Trennwand
- 30: Schulter
- 32: Membran
- 34: Kolbenscheibe
- 36: Rand
- 38: Betriebsbremskammer
- 42: Rand
- 44: Umbördelung
- 46: Rückholfeder
- 48: Mantelwand
- 50: Ringkammer
- 52: Atmungsbohrung
- 54: Befestigungsvonichtung
- 56: Bfestigungszapfen
- 58: Grundkörper
- 60: Schenkel
- 62: Schenkel
- 64: Schlitz
- 66: Abstandszapfen
- 68: Endabschnitt
- 70: Kunststoffkabelverbinder
- 72: Kunststoffstreifen
- 74: Zunge
- 76: Schlaufe
- 78: Aufnahmezapfen
- 80: Aufnahmezapfen
- 82: Befestigungsabschnitt
- 84: Durchgangsschlitz

## Patentansprüche

1. Vorrichtung, die ein Gehäuse mit einer Atmungsbohrung (52) aufweist, wobei das Gehäuse mit einer Befestigungsvorrichtung (54) zum äußeren Befestigen von Kabeln oder Leitungen versehen ist und die Befestigungsvorrichtung (54) einen Befestigungszapfen (56) aufweist, in dem ein Verbindungskanal (64) ausgebildet ist, **dadurch gekennzeichnet, dass** der Befestigungszapfen (56) in der Atmungsbohrung (52) des Gehäuses (12) verrastet ist, wobei im verrasteten Zustand das Innere (50) des Gehäuses (12) durch den Verbindungskanal (64) mit der Atmosphäre in Verbindung steht.

2. Vorrichtung nach Anspruch 1, **dadurch gekennzeichnet, dass** der Befestigungszapfen (56) in der Atmungsbohrung (52) derart verrastet ist, dass die Befestigungsvorrichtung (54) um eine Zapfenachse gegenüber dem Gehäuse (12) schwenkbar ist.

3. Vorrichtung nach Anspruch 1 oder 2, **dadurch gekennzeichnet, dass** der Befestigungszapfen (56) wenigstens zwei von einem Grundkörper (58) weg ragende, elastisch verformbare Schenkel (60, 62) mit einem zwischengeordneten Schlitz beinhaltet, welcher den Verbindungskanal (64) ausbildet.

4. Vorrichtung nach Anspruch 3, **dadurch gekennzeichnet, dass** von dem Grundkörper (58) wenigstens ein eine Außenfläche des Gehäuses (12) kontaktierender Abstandshalter (66) derart wegragt, dass ein sich über die Außenfläche hinaus erstreckender Endabschnitt (68) des Schlitzes (64) wenigstens seitlich mit der Atmosphäre in Verbindung steht.

5. Vorrichtung nach Anspruch 3 oder 4, **dadurch gekennzeichnet, dass** der Grundkörper (58) weiterhin mit einem Durchgangsschlitz (84) zur Durchführung eines elastischen Kunststoffkabelverbinders (70) versehen ist.

6. Vorrichtung nach wenigstens einem der Ansprüche 3 bis 5, **dadurch gekennzeichnet, dass** der Grundkörper (58) mit wenigstens zwei standardisierten Aufnahmen (78, 80) für elastische Kunststoffkabelverbinder (70) versehen ist, welche in verschiedene Richtungen weisen.

7. Vorrichtung nach Anspruch 6, **dadurch gekennzeichnet, dass** die standardisierten Aufnahmen (78, 80) derart ausgeführt sind, dass der Kunststoffkabelverbinder (70) mit ihnen verrastbar sind.

8. Vorrichtung nach Anspruch 7, **dadurch gekennzeichnet, dass** die standardisierten Aufnahmen (78, 80) durch einen hinterschnittenen Querschnitt aufweisende Aufnahmezapfen gebildet werden, welche in Öffnungen von Befestigungsabschnitten (82) der Kunststoffkabelverbinder (70) einrastbar sind.

## Claims

1. Device comprising a housing provided with a breathing bore (52), wherein the housing is provided with a fastening device (54) for outside attachment of cables or lines and said fastening device (54) comprises a fastening pin (56) in which a connecting passage (64) is formed, **characterised in that** said fastening pin (56) is locked in said breathing bore (52) of said housing (12), with the interior (50) of said housing (12), in the locked condition, communicating with the atmosphere through said connecting passage (64).

2. Device according to Claim 1, **characterised in that** said fastening pin (56) in said breathing bore (52) is locked in such a manner that said fastening device is pivotable about a pin axis relative to said housing (12).

3. Device according to Claims 1 or 2, **characterised in that** said fastening pin (56) includes at least two elastically deformable branches (60, 62) projecting away from a basic body (58) and enclosing a slot therebetween which forms said connecting passage (64).

4. Device according to Claim 3, **characterised in that** at least one spacer (66) contacting an outside surface of said housing (12) projects away from said basic body (58) in such a manner that a terminal section (68) of said slot (64), which extends beyond said outside surface, communicates with the atmosphere at least laterally.

5. Device according to Claim 3 or 4, **characterised in that** said basic body (58) is moreover provided with a slot passage (84) for passing a resilient synthetic cable connector (70) therethrough.

6. Device according to at least one of the Claims 3 to 5, **characterised in that** said basic body is provided with at least two standardised receiving elements (78, 80) to accommodate resilient synthetic cable connectors (70) extending in different directions.

7. Device according to any Claim 6, **characterised in that** said standardised receiving elements (78, 80) are so designed that said synthetic cable connector (70) can be locked with them.

8. Device according to Claim 7, **characterised in that** said standardised receiving elements (78, 80) are formed by receiving pins presenting an undercut cross-section, which are adapted to be locked in openings of fastening sections (82) of said synthetic cable connectors.

## Revendications

1. Dispositif comprenant un carter pourvu d'un alésage de gonflement (52), dans lequel le carter est pourvu d'un dispositif de fixation (54) pour l'attache extérieur des câbles ou lignes et ledit dispositif de fixation (54) comprend un téton d'attache (56), dans lequel est formé un canal de raccordement (64), **caractérisé en ce que** ledit téton d'attache (56) est enclenché dans ledit alésage de gonflement (52) dudit carter (12), à l'intérieur (50) dudit carter (12), en état enclenché, se trouvant en communication avec l'atmosphère à travers ledit canal de raccordement (64).

2. Dispositif selon la revendication 1, **caractérisé en ce que** ledit téton d'attache (56) dans ledit alésage de gonflement (52) est enclenché d'une telle manière, que ledit dispositif de fixation soit pivotable autour d'un axe de téton relativement audit carter (12).

3. Dispositif selon la revendications 1 ou 2, **caractérisé en ce que** ledit téton d'attache (56) renferme au moins deux bras (60, 62) élastiquement déformables, qui font saillie à partir d'un corps de base (58), en renfermant une fente y entre, qui constitue ledit canal de raccordement (64).

4. Dispositif selon la revendication 3, **caractérisé en ce qu'**au moins un écarteur (66) en contact avec une surface extérieure dudit carter (12) fait saillie à partir dudit corps de base (58) d'une telle manière, qu'une section terminale (68) de ladite fente (64), qui s'étend en saillie de ladite surface extérieure, se trouve en communication, au moins du côté, avec l'atmosphère.

5. Dispositif selon la revendication 3 ou 4, **caractérisé en ce que** ledit corps de base (58) est au plus pourvu d'une fente de passage (84) à y passer un élément élastique synthétique de raccord de câbles (70).

6. Dispositif selon au moins une quelconque des revendications 3 à 5, **caractérisé en ce que** ledit corps de base est pourvu d'au moins deux éléments récepteurs standardisés (78, 80) à recevoir des éléments élastiques synthétiques de raccord de câbles (70), qui s'étendent en directions différentes.

7. Dispositif selon la revendication 6, **caractérisé en ce que** lesdits éléments récepteurs standardisés (78, 80) sont conçus d'une telle façon, que ledit élément synthétique de raccord de câbles (70) puisse s'y enclencher.

8. Dispositif selon la revendication 7, **caractérisé en ce que** lesdits éléments récepteurs standardisés (78, 80) sont constitués par des tenons récepteurs, qui présentent une section transversale contre-dépouillée et qui sont aptes à s'enclencher dans des ouvertures des sections d'attache (82) desdits éléments synthétiques de raccord de câbles (70).
